# EUROPEAN PATENT SPECIFICATION

(11) **EP 4 187 664 B1**
(45) Date of publication and mention of the grant of the patent: **09.09.2026**
(21) Application number: 22209481.5
(22) Date of filing: 24.11.2022
(51) Int. Cl.: H01M 10/04, H01M 50/538, H01M 50/548, H01M 10/0587, H01M 50/536

(54) **BATTERY**
AKKU
BATTERIE

(30) Priority: 26.11.2021 JP 2021192060
(43) Date of publication of application: 31.05.2023
(73) Proprietor: Prime Planet Energy & Solutions, Inc., Tokyo 103-0022 (JP)
(72) Inventor: YANASE, Shota, Tokyo, 103-0022 (JP); HOSOKAWA, Takashi, Tokyo, 103-0022 (JP); MATSUI, Yu, Tokyo, 103-0022 (JP); YAMADA, Tomoyuki, Tokyo, 103-0022 (JP)
(74) Representative: Kuhnen & Wacker Patent- und Rechtsanwaltsbüro PartG mbB

(56) References cited:
- WO-A1-2021/192664
- CN-A- 112 117 497
- CN-U- 206 574 785

## Description

### BACKGROUND

The present disclosure relates to a battery.

WO 2021/060010 discloses a battery in which a positive electrode tab group is provided at one end of the wound electrode body in its longitudinal direction, and a negative electrode tab group is provided at the other end. WO 2021/060010 discloses a technology of connecting the tab group with being bent to an electrode collecting unit. CN 112 117 497 A discloses a battery with a stack electrode body having a lamination structure in which multilayers of the first electrode and the second electrode are stacked via the separator, multiple tabs connected to the first electrode protrude from one end of the electrode body, where in a thickness direction of the stack electrode body, the length of the electrode taps protruding is the shortest and increases towards the outer areas in the thickness direction of the electrode body. The end faces of the entire positive or negative lug formed after the tabs on both sides are moved closer to the middle tab and overlapped, resulting in the extension lengths of the tabs being the same, thus without the need of subsequent cutting, avoiding metal dust when welding the various layers of tabs. CN 206 574 785 U discloses battery comprising a wound electrode body having a lamination structure in which multilayers of the first electrode and the second electrode are stacked via the separator, multiple tabs connected to the first electrode protrude from one end of the wound electrode body in the winding axis direction, in a thickness direction of the wound electrode body, where the length of the protruded tabs is the longest in the central area in thickness direction of the wound electrode body and decreases towards the outermost area in the same direction, so that when folded and joined together, the length of extension ends of the tabs is the same. WO 2021/192664 A1, on which the preamble of claim 1 is based, discloses a battery comprising a flat wound electrode body housed in a battery case, wherein multiple tabs connected to the first electrode protrude from one end of the wound electrode body in the winding axis direction. At one edge of a positive electrode plate in a winding axis direction of an electrode body, two positive electrode tabs per turn are provided to protrude from the edge. At the other edge of a negative electrode plate in the winding axis direction of the electrode body, two negative electrode tabs per turn are provided to protrude from the edge. The multiple positive electrode tabs provided to protrude from the positive electrode plate include multiple types of positive electrode tabs having different protrusion lengths and proximal end widths, and the multiple negative electrode tabs provided to protrude from the negative electrode plate include multiple types of negative electrode tabs having different protrusion lengths and base end widths.

### SUMMARY

According to the study conducted by the present inventors, it was found that the winding diameter of the electrode may deviate due to variations in the thickness of the electrode and the separator used when producing the wound electrode body, and this may cause misalignment (specifically, misalignment in the direction orthogonal to the winding axis direction) between the tabs. In addition, it was also found that the thickness of the wound electrode body may vary due to variations in the springback rate of the electrode body formed into a flat shape, and this may cause misalignment between the tabs in the winding axis direction when the tabs are collected. Then, it was found that the misalignment between the tabs tends to occur more easily on tabs with shorter lengths in the protruding direction. Such misalignment between the tabs makes it difficult for the tabs to be collected and may reduce the yield of the wound electrode body, which is undesirable.

The present disclosure is intended to provide a technology for obtaining a battery including a wound electrode body with high productivity.

The present disclosure provides a battery including: a flat wound electrode body including a first electrode, a second electrode, and a separator, the first electrode and the second electrode being wound via the separator; and a battery case housing the wound electrode body. The wound electrode body has a lamination structure in which multilayers of the first electrode and the second electrode are stacked via the separator, multiple tabs connected to the first electrode protrude from one end of the wound electrode body in the winding axis direction, in a thickness direction of the wound electrode body, the thickness direction being a short side direction of the battery, an average value of shortest distances of the tabs present on one side of the wound electrode body with respect to a winding center of the wound electrode body from one end to tips of the tabs in a protruding direction of the tabs is equal to or less than an average value of shortest distances of the tabs present on the other side with respect to the winding center, a difference between the average value of the shortest distances of the tabs present on the one side and the average value of the shortest distances of the tabs present on the other side is smaller than a thickness of the wound electrode body, when the number of layers of the first electrode stacked is A and the number of the tabs is B on the one side, the ratio (B/A) is smaller than 1, and the tabs present on each of the one side and the other side are collected at a position at which the tabs are unevenly distributed on the one side with respect to the winding center in the thickness direction. In the wound electrode body having the tabs with different lengths, by eliminating at least some of the tabs on one side with a relatively small average value of the shortest distances of the tabs, misalignment between the tabs (specifically, e.g., misalignment between the tabs in the direction orthogonal to the winding axis direction or the winding axis direction) can be suitably reduced. This can increase the productivity of the battery including the wound electrode body. The tabs include a collector foil forming area on the one side, and when the shortest distances from one end in the winding axis direction to the collector foil forming area is a, the length of the collector foil forming area in the protruding direction is s, the thickness of the wound electrode body is d, and a minimum value of and a maximum value of the shortest distances of the tabs in the wound electrode body is H and H', respectively, the following relational expressions (I) and (II): $H = a + s$ $s + {\left({a}^{2}+{d}^{2}\right)}^{1 / 2} < H ′ < s + a + d$ are satisfied. With this configuration, when the tabs in the wound electrode body are collected, misalignment of the tabs in the winding axis direction can be suitably reduced, which is preferable.

In an aspect of the battery disclosed herein, the ratio (B/A) is smaller than a ratio (D/C) where the number of layers of the first electrode stacked is C and the number of tabs is D on the other side.

In an aspect of the battery disclosed herein, the B is smaller than the D.

In a preferred aspect of the battery disclosed herein, the ratio (B/A) is larger than 0.5 and smaller than 1. The value of the ratio (B/A) within the above-described range makes it easier to uniformize the potential unevenness within the wound electrode body, which is preferable. In some aspects, the ratio (B/A) is larger than 0.75 and smaller than 1.

In a preferred aspect of the battery disclosed herein, on a same winding roll of the wound electrode body, the shortest distances of the tabs present on the one side are smaller than the shortest distances of the tabs present on the other side. With this configuration, when the tabs in the wound electrode body are collected, misalignment of the tabs in the winding axis direction can be suitably reduced, which is preferable.

In a preferred aspect of the battery disclosed herein, the shortest distances of the tabs gradually decrease from an outer edge on the other side to an outer edge on the one side in the thickness direction. With this configuration, when the tabs in the wound electrode body are collected, misalignment of the tabs in the winding axis direction can be suitably reduced, which is preferable.

In some aspects, the shortest distances of the tabs other than a tab with a minimum shortest distance among the tabs in the wound electrode body satisfies the following relational expression (II).

### BRIEF DESCRIPTION OF THE DRAWINGS

Fig. 1 is a perspective view schematically illustrating a battery according to an embodiment.
Fig. 2 is a schematic longitudinal sectional view taken along line II-II of Fig. 1.
Fig. 3 is a schematic longitudinal sectional view taken along line III-III of Fig. 1.
Fig. 4 is a schematic transverse sectional view taken along line IV-IV of Fig. 1.
Fig. 5 is a perspective view schematically illustrating an electrode body group attached to a sealing plate.
Fig. 6 is a perspective view schematically illustrating an electrode body to which a positive electrode second collecting unit and a negative electrode second collecting unit are attached.
Fig. 7 is a schematic view of a configuration of a wound electrode body according to an embodiment.
Fig. 8 is a perspective view schematically showing a sealing plate to which a positive electrode terminal, a negative electrode terminal, a positive electrode first collecting unit, a negative electrode first collecting unit, a positive electrode insulating member, and a negative electrode insulating member have been attached.
Fig. 9 is an inverted perspective view of the sealing plate of Fig. 8.
Fig. 10 is a schematic view of an aspect of the wound electrode body according to an embodiment before winding.
Fig. 11 is a schematic view of an end surface of the wound electrode body according to an embodiment.
Fig. 12A is a schematic sectional view taken along line XII-XII of Fig. 11.
Fig. 12B is a schematic sectional view taken along line XII-XII of Fig. 11.
Fig. 13 is a schematic view of an aspect of a positive electrode tab group according to an embodiment before being bent.
Fig. 14 is a view according to a second embodiment, which corresponds to Fig. 12.
Fig. 15 is a view according to a third embodiment, which corresponds to Fig. 12.
Fig. 16 is a view according to a fourth embodiment, which corresponds to Fig. 12.
Fig. 17 is a view according to a fifth embodiment, which corresponds to Fig. 12.
Fig. 18 is a view according to a sixth embodiment, which corresponds to Fig. 12.
Fig. 19 is a view according to a seventh embodiment, which corresponds to Fig. 12.
Fig. 20 is a view according to an eighth embodiment, which corresponds to Fig. 12.

### DETAILED DESCRIPTION

Some preferred embodiments of the technology disclosed herein will be described below with reference to the accompanying drawings. The matters necessary for executing the present disclosure (e.g., the commonly used configuration and manufacturing processes of the battery that do not characterize the present disclosure), except for matters specifically herein referred to can be grasped as design matters of those skilled in the art based on the related art in the preset field. The present disclosure can be executed based on the contents disclosed herein and the technical knowledge in the present field. The following description is not intended to limit the technology disclosed herein to the following embodiments. The expression "A to B" indicating herein a range means A or more to B or less, and also encompasses the meaning of "exceeding A and less than B".

The "battery" herein is a term that indicates all electricity storage devices capable of extracting electric energy, and is a concept that encompasses primary batteries and secondary batteries. The "secondary battery" herein is a term that indicates all electricity storage devices that can be repeatedly charged and discharged, and is a concept that encompasses so-called secondary batteries (chemical batteries) such as a lithium-ion secondary battery and a nickel hydrogen battery and capacitors (physical batteries) such as an electric double layer capacitor.

### <General Configuration of Battery>

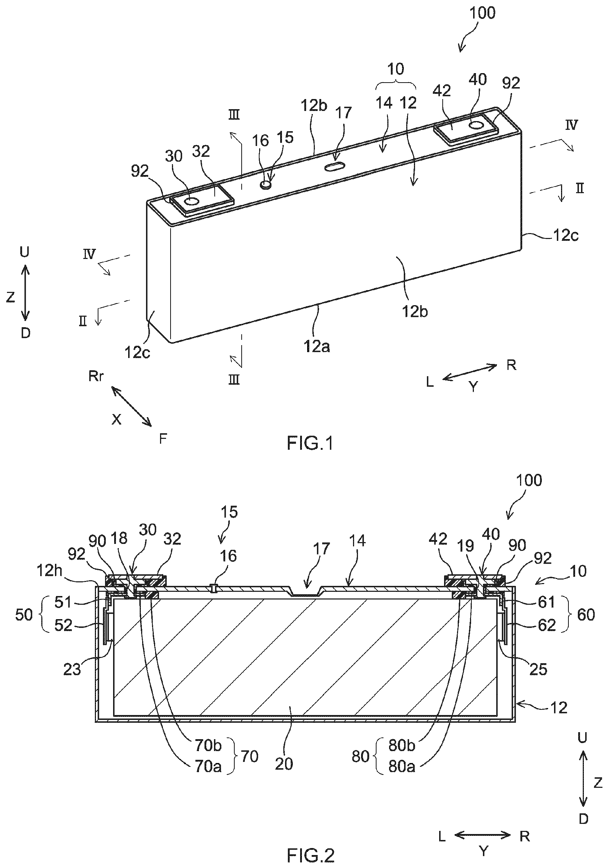

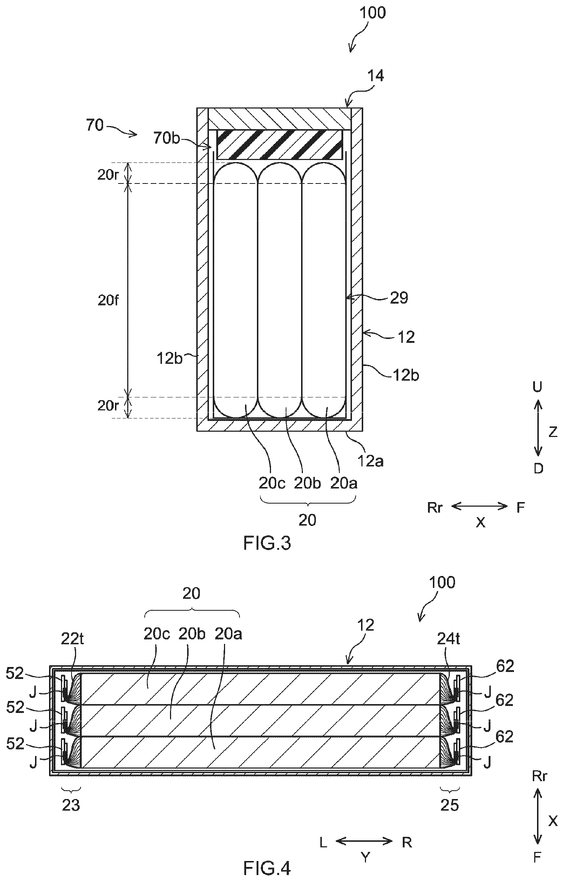

Fig. 1 is a perspective view of the battery 100. Fig. 2 is a schematic longitudinal sectional view taken along line II-II of Fig. 1. Fig. 3 is a schematic longitudinal sectional view taken along line III-III of Fig. 1. Fig. 4 is a schematic transverse sectional view taken along line IV-IV of Fig. 1. In the following description, the reference signs L, R, F, Rr, U, and D in the drawings represent left, right, front, rear, top, and bottom, and the signs X, Y, and Z in the drawings represent the short side direction, long side direction orthogonal to the short side direction (also referred to as a winding axis direction), and up-down direction of the battery 100, respectively. Such directions are defined for convenience of explanation and are not intended to limit the installation configuration of the battery 100. The following describes the case where the first electrode is a positive electrode, but the technology disclosed herein is applicable to the case where the first electrode is a negative electrode. The technology disclosed herein may be applied to both the positive electrode and the negative electrode.

As shown in Fig. 2, the battery 100 includes a battery case 10 and an electrode body (here, an electrode body group 20). The battery 100 according to the present embodiment includes, in addition to the battery case 10 and the electrode body group 20, a positive electrode terminal 30, a positive electrode external electroconductive member 32, a negative electrode terminal 40, a negative electrode external electroconductive member 42, an external insulating member 92, a positive electrode collecting unit 50, a negative electrode collecting unit 60, a positive electrode internal insulating member 70, and a negative electrode internal insulating member 80. Although not shown in the drawings, the battery 100 according to the present embodiment further includes an electrolyte. The battery 100 herein is a lithium-ion secondary battery. The battery 100 has an internal resistance of, for example, about 0.2 mΩ to about 2.0 mΩ. In the present embodiment, the capacity of the battery 100 per volume is 40 Ah/L or more.

The battery case 10 is a housing for housing the electrode body group 20. The battery case 10 herein has a flat, bottomed rectangular (square) outside shape. The material of the battery case 10 may be the same as a commonly used material without particular limitations. The battery case 10 is made of preferably metal having a predetermined strength. Specifically, the metal for use in the battery case 10 suitably has a tensile strength of about 50 N/mm² to about 200 N/mm². The metal for use in the battery case 10 suitably has a physical property value (rigidity modulus) of about 20 GPa to about 100 GPa. Examples of this type of metal material include aluminum, an aluminum alloy, iron, and an iron alloy.

The battery case 10 includes an exterior body 12, a sealing plate 14, and a gas discharge valve 17. The exterior body 12 is a flat, square container having a side with an opening 12h. Specifically, as shown in Fig. 1, the exterior body 12 has a substantially rectangular bottom wall 12a, a pair of first side walls 12b extending upward U from the respective shorter sides of the bottom wall 12a and facing each other, and a pair of second side walls 12c extending upward U from the respective longer sides of the bottom wall 12a and facing each other. The opening 12h is formed in the top surface of the exterior body 12 surrounded by the pair of first side walls 12b and the pair of second side walls 12c. The sealing plate 14 is attached to the exterior body 12 so as to seal the opening 12h of the exterior body 12. The sealing plate 14 has a substantially rectangular shape in plan view. The sealing plate 14 faces the bottom wall 12a of the exterior body 12. The battery case 10 is formed by the sealing plate 14 bonded (e.g., by welding) to the periphery of the opening 12h of the exterior body 12. The sealing plate 14 is bonded by, for example, welding such as laser welding.

As shown in Figs. 1 and 2, the gas discharge valve 17 is formed in the sealing plate 14. The gas discharge valve 17 is configured to open and discharge gas inside the battery case 10 when the pressure inside the battery case 10 exceeds a predetermined value or more.

The sealing plate 14 is provided with a liquid injection hole 15 and two terminal inlets 18 and 19 in addition to the gas discharge valve 17. The liquid injection hole 15 is an opening communicating with an internal space of the exterior body 12 and is provided for injecting an electrolyte in the manufacturing process of the battery 100. The liquid injection hole 15 is sealed with a sealing member 16. For example, the sealing member 16 is suitably a blind rivet. This allows the sealing member 16 to be firmly fixed inside the battery case 10. The liquid injection hole 15 may have a diameter of about 2 mm to about 5 mm. The terminal inlets 18 and 19 are formed in both ends of the sealing plate 14 in the long side direction Y The terminal inlets 18 and 19 penetrate the sealing plate 14 in the up-down direction Z. As shown in Fig. 2, a positive electrode terminal 30 is inserted into one (left) terminal inlet 18 in the long side direction Y The negative electrode terminal 40 is inserted into the other (right) terminal inlet 19 in the long side direction Y The terminal inlets 18 and 19 may each have a diameter of about 10 mm to about 20 mm.

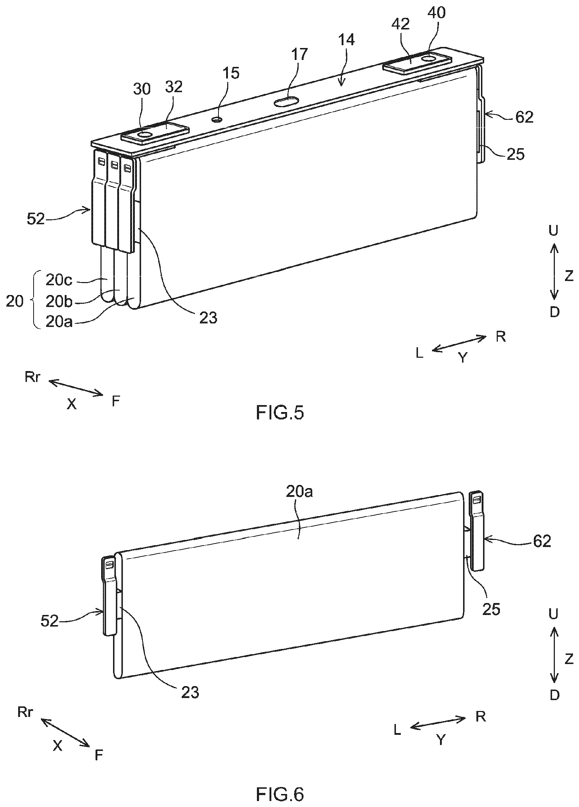

Fig. 5 is a perspective view schematically illustrating the electrode body group 20 attached to the sealing plate 14. In the present embodiment, the battery case 10 houses multiple (here, three) electrode bodies 20a, 20b, and 20c inside. The number of electrode bodies 20 housed inside a single battery case 10 is not particularly limited, and may be one, or two or more (multiple). As shown in Fig. 2, the positive electrode collecting unit 50 is arranged on one side (left side in Fig. 2) of each electrode body in the long side direction Y, and the negative electrode collecting unit 60 is arranged on the other side (the right side in Fig. 2) in the long side direction Y The electrode bodies 20a, 20b, and 20c are connected in parallel. The electrode bodies 20a, 20b, and 20c may be connected in series. The electrode body group 20 herein is housed inside the exterior body 12 of the battery case 10 with being covered with an electrode body holder 29 (see Fig. 3) made of a resin sheet.

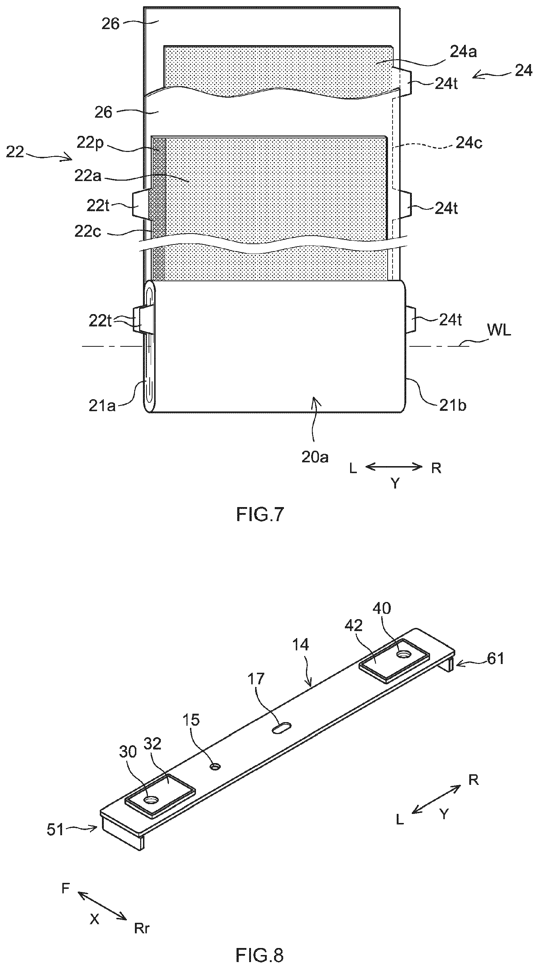

Fig. 6 is a perspective view schematically illustrating the electrode body 20a. Fig. 7 is a schematic view illustrating a configuration of the electrode body 20a. The electrode body 20a will be described in detail below as an example, but the same configuration can be applied to the electrode bodies 20b and 20c.

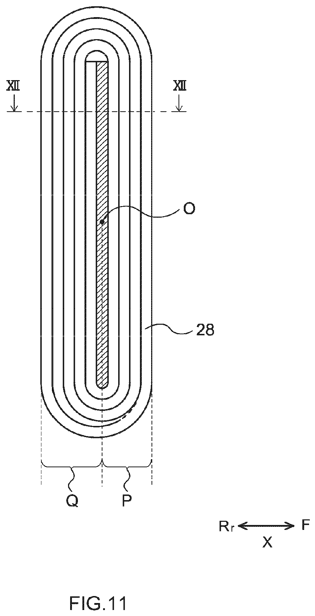

As shown in Fig. 7, the electrode body 20a includes a positive electrode 22, a negative electrode 24, and a separator 26. The electrode body 20a is a wound electrode body where a strip-like positive electrode 22 and a strip-like negative electrode 24 are stacked via two strip-like separators 26, and wound around the winding axis WL. In other words, the electrode body 20a has a lamination structure 28 where multilayers of the positive electrode 22 and the negative electrode 24 are stacked via the separators 26 (see Fig. 11).

The electrode body 20a has a flat shape. The electrode body 20a is arranged inside the exterior body 12 such that the winding axis WL is substantially parallel with the long side direction Y Specifically, as shown in Fig. 3, the electrode body 20a includes a pair of curved portions (R portions) 20r facing the bottom wall 12a of the exterior body 12 and the sealing plate 14, and a flat portion 20f which connects the pair of curved portions 20r and faces the second side wall 12c of the exterior body 12. The flat portion 20f extends along the second side wall 12c.

As shown in Fig. 7, the positive electrode 22 includes: a positive electrode collecting unit 22c, and a positive electrode active material layer 22a and a positive electrode protective layer 22p fixed to at least one surface of the positive electrode collecting unit 22c. Note that the positive electrode protective layer 22p is not essential, and may be omitted in other embodiments. The positive electrode collecting unit 22c has a strip shape. The positive electrode collecting unit 22c is made of, for example, an electroconductive metal such as aluminum, an aluminum alloy, nickel, and stainless steel. The positive electrode collecting unit 22c herein is a metal foil, specifically an aluminum foil.

At one end of the positive electrode collecting unit 22c in the long side direction Y (left end in Fig. 7), multiple positive electrode tabs 22t are provided. Multiple positive electrode tabs 22t are spaced (intermittently) along the longitudinal direction of the strip-like positive electrode 22. The positive electrode tabs 22t protrude outward from the separators 26 toward one side of the axial direction of the winding axis WL (left side in Fig. 7). The positive electrode tabs 22t may be provided on the other side of the axial direction of the winding axis WL (right side in Fig. 7), or may be provided on each of both sides of the axial direction of the winding axis WL. Each positive electrode tab 22t is part of the positive electrode collecting unit 22c, and made of a metal foil (aluminum foil). However, the positive electrode tabs 22t may be members separate from the positive electrode collecting unit 22c. In at least part of the positive electrode tab 22t, the positive electrode active material layer 22a and the positive electrode protective layer 22p are not formed, and the positive electrode collecting unit 22c is exposed. In the present embodiment, the shape of each positive electrode tab 22t is trapezoidal, but is not limited thereto, and can be any of various shapes such as rectangular. The thickness of the positive electrode tab 22t is not particularly limited as long as the effects of the technology disclosed herein are exhibited, but can be, for example, about 5 µm to about 30 µm. The shortest distance from the base of the positive electrode tab 22t to the tip in the protruding direction (i.e., the length of the positive electrode tab 22t in the protruding direction) is not particularly limited as long as the effects of the technology disclosed herein are exhibited, but is, for example, about 5 mm to about 50 mm, preferably about 10 mm to about 30 mm. The base width of the positive electrode tab 22t is not particularly limited as long as the effects of the technology disclosed herein are exhibited, but can be, for example, about 40 mm or less. The details of the positive electrode tabs 22t will be described later.

As shown in Fig. 4, the positive electrode tabs 22t are stacked at one end of the axial direction of the winding axis WL (left end in Fig. 4) and constitute a positive electrode tab group 23. The positive electrode tabs 22t are bent such that their outer edges are aligned. This improves an ability of housing the battery 100 in the battery case 10, thereby downsizing the battery 100. As shown in Fig. 2, the positive electrode tab group 23 is electrically connected to the positive electrode terminal 30 via the positive electrode collecting unit 50. Specifically, the positive electrode tab group 23 and the positive electrode second collecting unit 52 are connected at a connection portion J (see Fig. 4). The positive electrode second collecting unit 52 is electrically connected to the positive electrode terminal 30 via the positive electrode first collecting unit 51.

The positive electrode active material layer 22a is provided in a strip shape along the longitudinal direction of the strip-like positive electrode collecting unit 22c, as shown in Fig. 7. The positive electrode active material layer 22a contains a positive electrode active material (e.g., a lithium-transition metal composite oxide such as lithium-nickel-cobalt-manganese composite oxide) which can reversibly store and release charge carriers. The content of the positive electrode active material is approximately 80 mass% or more, typically 90 mass% or more, for example, 95 mass% or more relative to 100 mass% of the entire solid content of the positive electrode active material layer 22a. The positive electrode active material layer 22a may further contain optional components such as an electroconductive material, a binder, and various additives besides the positive electrode active material. The electroconductive material used may be, for example, a carbon material such as acetylene black (AB). The binder used may be, for example, polyvinylidene fluoride (PVdF).

As shown in Fig. 7, the positive electrode protective layer 22p is provided at the boundary between the positive electrode collecting unit 22c and the positive electrode active material layer 22a in the long side direction Y The positive electrode protective layer 22p herein is provided at one end (left end in Fig. 7) of the positive electrode collecting unit 22c in the axial direction of the winding axis WL. The positive electrode protective layer 22p may be provided at each of both ends in the axial direction. The positive electrode protective layer 22p is provided in a strip shape along the positive electrode active material layer 22a. The positive electrode protective layer 22p may contain an inorganic filler (e.g., alumina). The content of the inorganic filler is approximately 50 mass% or more, typically 70 mass% or more, for example, 80 mass% or more relative to 100 mass% of the entire solid content of the positive electrode protective layer 22p. The positive electrode protective layer 22p may further contain optional components such as an electroconductive material, a binder, and various additives besides the inorganic filler. The electroconductive material and the binder may be the same as those shown as possible components in the positive electrode active material layer 22a.

As shown in Fig. 7, the negative electrode 24 includes a negative electrode collecting unit 24c and a negative electrode active material layer 24a fixed to at least one surface of the negative electrode collecting unit 24c. The negative electrode collecting unit 24c has a strip shape. The negative electrode collecting unit 24c is made of, for example, an electroconductive metal such as copper, a copper alloy, nickel, and stainless steel. The negative electrode collecting unit 24c herein is a metal foil, specifically a copper foil.

At one end of the negative electrode collecting unit 24c in the axial direction of the winding axis WL (right end in Fig. 7), multiple negative electrode tabs 24t are provided. Multiple negative electrode tabs 24t are spaced (intermittently) along the longitudinal direction of the strip-like negative electrode 24. The negative electrode tabs 24t protrude outward from the separators 26 toward one side of the axial direction (right side in Fig. 7). The negative electrode tabs 24t may be provided at the other end (left end in Fig. 7) of the axial direction, or at both ends of the axial direction. Each negative electrode tab 24t is part of the negative electrode collecting unit 24c, and made of a metal foil (copper foil). However, the negative electrode tabs 24t may be members separate from the negative electrode collecting unit 24c. In at least part of the negative electrode tab 24t, the negative electrode active material layer 24a is not formed, and the negative electrode collecting unit 24c is exposed. In the present embodiment, the shape of each negative electrode tab 24t is trapezoidal, but is not limited thereto, and can be any of various shapes such as rectangular. The thickness of the negative electrode tab 24t is not particularly limited as long as the effects of the technology disclosed herein are exhibited, but can be, for example, about 5 µm to about 30 µm. The shortest distance from the base of the negative electrode tab 24t to the tip in the protruding direction (i.e., the length of the negative electrode tab 24t in the protruding direction) is not particularly limited as long as the effects of the technology disclosed herein are exhibited, but is, for example, about 5 mm to about 50 mm, preferably about 10 mm to about 30 mm. The base width of the negative electrode tab 24t is not particularly limited as long as the effects of the technology disclosed herein are exhibited, but can be, for example, about 40 mm or less. The details of the negative electrode tabs 24t will be described later.

As shown in Fig. 4, multiple negative electrode tabs 24t are stacked at one end in the axial direction (right end in Fig. 4) and constitute the negative electrode tab group 25. The negative electrode tab group 25 is provided at a position symmetrical to the positive electrode tab group 23 in the axial direction. The negative electrode tabs 24t are bent such that their outer edges are aligned. This improves an ability of housing the battery 100 in the battery case 10, thereby downsizing the battery 100. As shown in Fig. 2, the negative electrode tab group 25 is electrically connected to the negative electrode terminal 40 via the negative electrode collecting unit 60. Specifically, the negative electrode tab group 25 and the negative electrode second collecting unit 62 are connected at a connection portion J (see Fig. 4). The negative electrode second collecting unit 62 is electrically connected to the negative electrode terminal 40 via the negative electrode first collecting unit 61.

The negative electrode active material layer 24a is provided in a strip shape along the longitudinal direction of the strip-like negative electrode collecting unit 24c, as shown in Fig. 7. The negative electrode active material layer 24a contains a negative electrode active material (e.g., a carbon material such as graphite) which can reversibly store and release charge carriers. The content of the negative electrode active material is approximately 80 mass% or more, typically 90 mass% or more, for example, 95 mass% or more relative to 100 mass% of the entire solid content of the negative electrode active material layer 24a. The negative electrode active material layer 24a may further contain optional components such as a binder, a dispersant, and various additives. Examples of the binder used include rubbers such as styrenebutadiene rubber (SBR). Examples of the dispersant used include celluloses such as carboxymethyl cellulose (CMC).

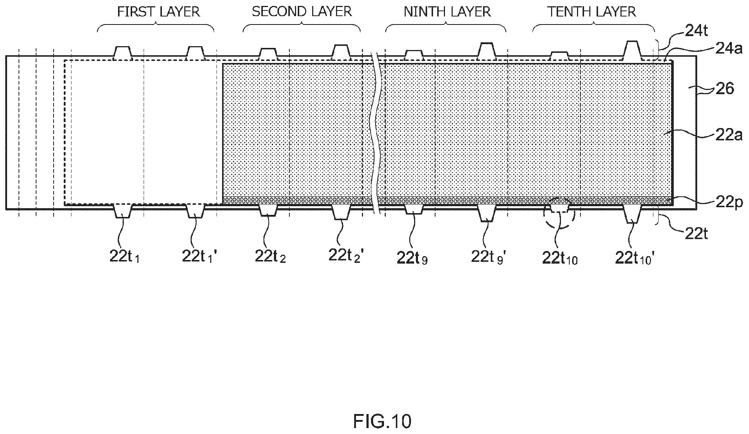

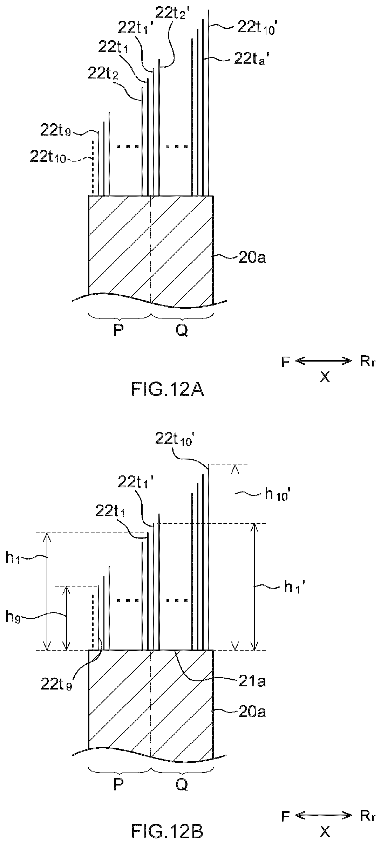

Next, multiple positive electrode tabs 22t and multiple negative electrode tabs 24t included in the electrode body 20a according to the present embodiment will be described below. Fig. 10 is a schematic view of an aspect of the electrode body 20a according to the present embodiment before being wound. Fig. 11 is a schematic view of an end surface from which the positive electrode tabs 22t protrude in the electrode body 20a according to the present embodiment. In Fig. 11, illustration of the positive electrode tabs is omitted for ease of explanation. Figs. 12A and 12B are schematic sectional views taken along line XII-XII of Fig. 11. As shown in Fig. 10, the positive electrode tabs 22t and the negative electrode tabs 24t have different lengths from each other such that their outer edges are aligned when curved. The following description focuses on the positive electrode tabs 22t to which the technology disclosed herein is applied. In the present embodiment, the positive electrode tab 22t (corresponding to the positive electrode tab 22t₁₀ in Fig. 10) is eliminated.

As shown in Fig. 12A, in the present embodiment, a region of the electrode body 20a on one side of the electrode body 20a with respect to the winding center O in the thickness direction X of the electrode body 20a is the first region P, and the other region is the second region Q. The positive electrode tabs 22t included in the first region P are positive electrode tabs 22t₁, 22t₂, ..., and 22t₉, and the positive electrode tabs 22t included in the second region Q are positive electrode tabs 22t₁'_{,} 22t₂', ..., 22t₉', and 22t₁₀'. As shown in Fig. 12B, the shortest distance (hereinafter also merely referred to as the "shortest distance of the positive electrode tab") of each of the positive electrode tabs 22t₁, 22t₂, ..., and 22t₉ from one end 21a of the electrode body 20a to the tip of each of the positive electrode tabs 22t in the protruding direction is h₁, h₂, ..., or h₉, and the shortest distance of each of the positive electrode tabs 22ti', 22t₂', ..., 22t₉', and 22t₁₀' from one end 21a of the electrode body 20a to the tip of each of the positive electrode tabs 22t in the protruding direction is h₁', h₂', ..., h₉', or h₁₀'. In Figs. 12A and 12B, the eliminated positive electrode tab 22t₁₀ is shown by a dashed line. By eliminating at least some of the tabs on one side with a relatively small average value of the shortest distances of the positive electrode tabs 22t, misalignment between the positive electrode tabs 22t (specifically, e.g., misalignment between the positive electrode tabs 22t in the direction orthogonal to the winding axis direction or the winding axis direction) can be suitably reduced.

In the present embodiment, the positive electrode tabs 22t are formed such that the shortest distances of the positive electrode tabs 22t in the thickness direction X of the electrode body 20a gradually decrease from the outer edge of the second region Q to the outer edge of the first region P. With such a configuration, when curved can be suitably aligned) when the positive electrode tabs 22t are collected, misalignment between the positive electrode tabs 22t in the winding axis direction can be suitably reduced (in other words, the tips of the positive electrode tabs 22t, which is preferable. Although not limited thereto, for adjacent positive electrode tabs 22t in the first region P and the second region Q, the ratio of the shortest distance of the positive electrode tab 22t present in the second region Q to the shortest distance of the positive electrode tab 22t in the first region P can be, for example, 1.1 or more, 1.2 or more. The upper limit of the ratio between the shortest distances of the positive electrode tabs 22t is not particularly limited as long as the effects of the technology disclosed herein are exhibited, but can be, for example, 1.4 or less, 1.3 or less.

As shown in Fig. 12B, in the present embodiment, an average value of the shortest distances (i.e., h₁, h₂, ..., and h₉) of the positive electrode tabs 22t present in the first region P is equal to or less than an average value of the shortest distances (i.e., h₁', h₂', ..., h₉', and h₁₀') of the positive electrode tabs 22t present in the second region Q. Further, a difference between the average value of the shortest distances of the positive electrode tabs 22t in the first region P and the average value of the shortest distances of the positive electrode tabs 22t in the second region Q is smaller than the thickness of the electrode body 20a.

As mentioned above, in the present embodiment, the positive electrode tab 22t10 present on the outermost periphery among the positive electrode tabs 22t in the first region P is eliminated. In other words, when the number of layers of the positive electrode stacked in the first region P is A, and the number of the positive electrode tabs 22t is B, the ratio (B/A) is 9/10 = 0.9 (i.e., smaller than 1). The number of layers of the positive electrode stacked indicates the number of layers in which the positive electrode tabs are formed, and is a concept encompassing a layer in which the positive electrode tabs are formed but the positive electrode active material layer and the positive electrode protective layer are not formed (e.g., see the first layer in Fig. 10) (the same applies to the number of layers of the negative electrode stacked). The positive electrode tab 22t may be eliminated during production of the positive electrode 22, or after forming a flat electrode body. However, in view of production of the electrode body 20a in a more simplified manner, the positive electrode tab 22t is eliminated preferably during production of the positive electrode 22. The positive electrode tab 22t can be eliminated by laser cutting, for example (the same applies to the negative electrode tab 24t).

The ratio (B/A) may be less than 1, and is not particularly limited as long as the effects of the technology disclosed herein are exhibited. The lower limit of the ratio (B/A) is, for example, 0.25 or more, and is preferably 0.5 or more (e.g., over 0.5), more preferably 0.6 or more, 0.7 or more, 0.75 or more (e.g., over 0.75) in view of facilitating uniformizing of potential unevenness in the electrode body 20a. That is, the ratio (B/A) is preferably larger than 0.5 and less than 1, larger than 0.75 and less than 1.

The relationship between the ratio (B/A) and the ratio (D/C) where the number of layers of the positive electrode stacked in the second region Q is C and the number of positive electrode tabs 22t is D is not particularly limited as long as the effects of the technology disclosed herein are exhibited. For example, in the present embodiment, the ratio (B/A) is 0.9, and the ratio (D/C) is 10/10 = 1. In other words, in the present embodiment, the ratio (B/A) is smaller than the ratio (D/C).

The relationship between the number B of the positive electrode tabs 22t in the first region P and the number D of the positive electrode tabs 22t in the second region Q is not particularly limited as long as the effects of the technology disclosed herein are exhibited. The number B and the number D may be identical to or different from each other. For example, in the present embodiment, the number B is 9, and the number D is 10. In other words, in the present embodiment, the number B is smaller than the number D.

As shown in Fig. 10, in the present embodiment, on the same winding roll (i.e., the same layer in Fig. 10) in the electrode body 20a, the shortest distances of the positive electrode tabs 22t present in the first region P are smaller than the shortest distances of the positive electrode tabs 22t present in the second region Q. With such a configuration, when the positive electrode tabs 22t are collected, misalignment between the positive electrode tabs 22t in the winding axis direction can be suitably reduced, which is preferable.

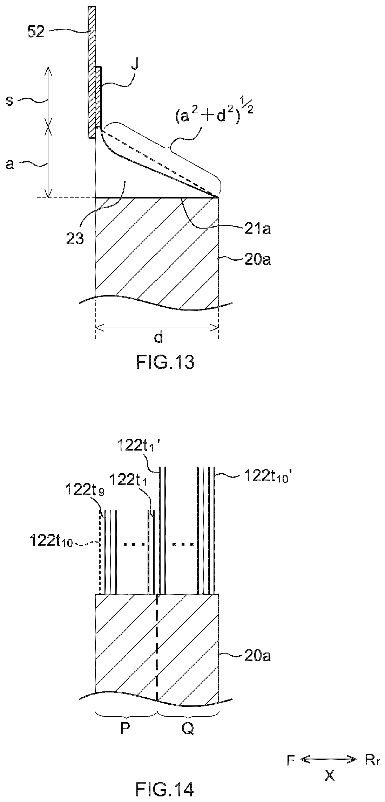

Fig. 13 is a schematic view of an aspect of a positive electrode tab group 23 according to the present embodiment before being bent. As shown in Fig. 13, the positive electrode tabs 22t present in the first region P and the second region Q are collected at a position at which the positive electrode tabs 22t are unevenly distributed. Here, in Fig. 13, assume that the shortest distance from the end 21a of the electrode body 20a in the winding axis direction to the collector foil forming area is a, the length of the collector foil forming area in the protruding direction is s, the thickness of the electrode body 20a is d, and the minimum value and the maximum value of the shortest distances of the positive electrode tabs 22t in the electrode body 20a is H (corresponding to h9 of Fig. 12B in the present embodiment) and H' (corresponding to h10' of Fig. 12B in the present embodiment), respectively. At this time, the following equations are satisfied. H = a + s ··· (I), s + (a² + d2)^{1/2} < H' < s + a + d · · (II) With such a configuration, when the positive electrode tabs 22t are collected, misalignment between the positive electrode tabs 22t in the winding axis direction can be suitably reduced, which is preferable. Here, the collector foil forming area may mean an area from the end of the bonding portion (the bonding portion J in the present embodiment) on the electrode body side to the tips of the tabs in the protruding direction.

In the present embodiment, for the shortest distances (h₂, ..., h₉, h₁', h₂', ..., h₉' and h₁₀') of the positive electrode tabs 22t except for the positive electrode tab 22t (corresponding to the positive electrode tab 22ti of Fig. 12A in the present embodiment) with the minimum value of the shortest distances among the positive electrode tabs 22t in the electrode body 20a, when the thickness d of the electrode body is converted into the thickness of the positive electrode tab 22t × the number of the positive electrode tabs 22t, the above relational expression (II) is satisfied.

In the present embodiment, the number of positive electrode tabs 22t in the electrode body 20a is 19, but is not limited thereto. The number of positive electrode tabs in the electrode body is, for example, 10 or more, and is preferably 15 or more, 20 or more, more preferably 30 or more in view of suitably reducing the resistance of the electrode body. The same applies to the second embodiment to the eighth embodiment to be described later.

As shown in Fig. 7, the separators 26 are each a member insulating between the positive electrode active material layer 22a of the positive electrode 22 and the negative electrode active material layer 24a of the negative electrode 24. The separators 26 are each suitably a resin-made porous sheet made of a polyolefin resin such as polyethylene (PE) and polypropylene (PP). The separator 26 preferably includes a base portion made of the resin-made porous sheet and a heat-resistance layer (HRL) formed on at least one surface of the base portion and containing an inorganic filler. Examples of the inorganic filler used include alumina, boehmite, aluminium hydroxide, and titania.

The electrolyte may be the same as a commonly used one without particular limitations. The electrolyte is, for example, a nonaqueous electrolyte containing nonaqueous solvent and a supporting electrolyte. Examples of the nonaqueous solvent include carbonates such as ethylene carbonate, dimethyl carbonate, and ethyl methyl carbonate. Examples of the supporting electrolyte include fluorine-containing lithium salts such as LiPF₆. The electrolyte may be solid (solid electrolyte) and integral with the electrode body group 20.

The positive electrode terminal 30 is inserted into the terminal inlet 18 formed at one end (left end in Fig. 2) of the sealing plate 14 in the long side direction Y The positive electrode terminal 30 is made of preferably metal, more preferably aluminum or an aluminum alloy, for example. The negative electrode terminal 40 is inserted into the terminal inlet 19 formed at the other end (right end in Fig. 2) of the sealing plate 14 in the long side direction Y The negative electrode terminal 40 is made of preferably metal, more preferably copper or a copper alloy, for example. These electrode terminals (the positive electrode terminal 30 and the negative electrode terminal 40) herein protrude from the same surface (specifically the sealing plate 14) of the battery case 10. However, the positive electrode terminal 30 and the negative electrode terminal 40 may protrude form different surfaces of the battery case 10. The electrode terminals (the positive electrode terminal 30 and the negative electrode terminal 40) inserted into the terminal inlets 18 and 19 are preferably fixed to the sealing plate 14 by crimping processing or the like.

As mentioned above, the positive electrode terminal 30 is, as shown in Fig. 2, is electrically connected to the positive electrode 22 of each of the electrode bodies (see Fig. 7) via the positive electrode collecting unit 50 (the positive electrode first collecting unit 51 and the positive electrode second collecting unit 52) inside the exterior body 12. The positive electrode terminal 30 is insulated from the sealing plate 14 by the positive electrode internal insulating member 70 and the gasket 90. The positive electrode internal insulating member 70 includes a base portion 70a interposed between the positive electrode first collecting unit 51 and the sealing plate 14, and a protrusion 70b protruding from the base portion 70a toward the electrode body group 20. The positive electrode terminal 30 exposed to the outside of the battery case 10 through the terminal inlet 18 is connected to the positive electrode external electroconductive member 32 outside the sealing plate 14. On the other hand, the negative electrode terminal 40 is, as shown in Fig. 2, electrically connected to the negative electrode 24 of each of the electrode bodies (see Fig. 7) via the negative electrode collecting unit 60 (the negative electrode first collecting unit 61 and the negative electrode second collecting unit 62) inside the exterior body 12. The negative electrode terminal 40 is insulated from the sealing plate 14 by the negative electrode internal insulating member 80 and the gasket 90. Similarly to the positive electrode internal insulating member 70, the negative electrode internal insulating member 80 includes a base portion 80a interposed between the negative electrode first collecting unit 61 and the sealing plate 14, and a protrusion 80b protruding from the base portion 80a toward the electrode body group 20. The negative electrode terminal 40 exposed to the outside of the battery case 10 through the terminal inlet 19 is connected to the negative electrode external electroconductive member 42 outside the sealing plate 14. The external insulating members 92 intervene between the external electroconductive members (the positive electrode external electroconductive member 32 and the negative electrode external electroconductive member 42) and the outer surface 14d of the sealing plate 14. The external insulating members 92 can insulate between the external electroconductive members 32 and 42 and the sealing plate 14.

The protrusions 70b and 80b of the internal insulating members (the positive electrode internal insulating member 70 and the negative electrode internal insulating member 80) are arranged between the sealing plate 14 and the electrode body group 20. The protrusions 70b and 80b of the internal insulating members can restrict upward movement of the electrode body group 20, and prevent contact between the sealing plate 14 and the electrode body group 20.

### <Method of Manufacturing Battery>

The battery 100 can be manufactured by providing the battery case 10 (the exterior body 12 and the sealing plate 14), the electrode body group 20 (the electrode bodies 20a, 20b, and 20c), the electrolyte, the positive electrode terminal 30, the negative electrode terminal 40, the positive electrode collecting unit 50 (the positive electrode first collecting unit 51 and the positive electrode second collecting units 52), the negative electrode collecting unit 60 (the negative electrode first collecting unit 61 and the negative electrode second collecting unit 62), the positive electrode internal insulating member 70, and the negative electrode internal insulating member 80 and a manufacturing method including, for example, first attaching, second attaching, inserting, and sealing. The manufacturing method disclosed herein may further include other processes at any stage.

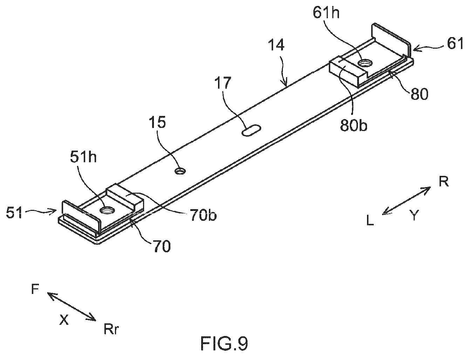

In the first attaching, a first integrated body is produced as shown in Figs. 8 and 9. Specifically, first, a positive electrode terminal 30, a positive electrode first collecting unit 51, a positive electrode internal insulating member 70, a negative electrode terminal 40, a negative electrode first collecting unit 61, and a negative electrode internal insulating member 80 are attached to the sealing plate 14.

The positive electrode terminal 30, the positive electrode first collecting unit 51, and the positive electrode internal insulating member 70 are fixed to the sealing plate 14 by crimping processing (riveting), for example. The crimping processing is performed such that a gasket 90 is sandwiched between the outer surface of the sealing plate 14 and the positive electrode terminal 30, and the positive electrode internal insulating member 70 is sandwiched between the inner surface of the sealing plate 14 and the positive electrode first collecting unit 51. The material of the gasket 90 may be the same as that of the positive electrode internal insulating member 70. Specifically, the positive electrode terminal 30 before crimping processing is inserted, from above the sealing plate 14, into the through hole of the gasket 90, the terminal inlet 18 of the sealing plate 14, the through hole of the positive electrode internal insulating member 70, and the through hole 51h of the positive electrode first collecting unit 51 in this order to protrude downward the sealing plate 14. Then, a portion of the positive electrode terminal 30 protruding downward from the sealing plate 14 is crimped such that a compressive force is applied toward the up-down direction Z. Thus, a crimped portion is formed at the tip of the positive electrode terminal 30 (lower end in Fig. 2).

In such crimping processing, the gasket 90, the sealing plate 14, the positive electrode internal insulating member 70, and the positive electrode first collecting unit 51 are integrally fixed to the sealing plate 14, and the terminal inlet 18 is sealed. The crimped portion may be bonded to the positive electrode first collecting unit 51 by welding. This can further improve reliability of the electroconduction.

Fixing of the negative electrode terminal 40, the negative electrode first collecting unit 61, and the negative electrode internal insulating member 80 can be performed in the same manner as for the positive electrode. Specifically, the negative electrode terminal 40 before crimping processing is inserted, from above the sealing plate 14, into the through hole of the gasket, the terminal inlet 19 of the sealing plate 14, the through hole of the negative electrode internal insulating member 80, and the through hole 61h of the negative electrode first collecting unit 61 in this order to protrude downward the sealing plate 14. Then, a portion of the negative electrode terminal 40 protruding downward from the sealing plate 14 is crimped such that a compressive force is applied toward the up-down direction Z. Thus, a crimped portion is formed at the tip of the negative electrode terminal 40 (lower end in Fig. 2).

The positive electrode external electroconductive member 32 and the negative electrode external electroconductive member 42 are attached to the outer surface of the sealing plate 14 via the external insulating members 92. The material of the external insulating members 92 may be the same as that of the positive electrode internal insulating member 70. The timing of attaching the positive electrode external electroconductive member 32 and the negative electrode external electroconductive member 42 may be after the inserting (e.g., after sealing the liquid injection hole 15).

In the second attaching, a second integrated body shown in Fig. 5 is produced by using the first integrated body produced in the first attaching. In other words, the electrode body group 20 integral with the sealing plate 14 is produced. The electrode body 20a can be produced by providing a positive electrode 22 including multiple positive electrode tabs 22t such as mentioned above, a negative electrode 24 including multiple negative electrode tabs 24t such as mentioned above, and a separator and based on a known method of manufacturing a wound electrode body. Specifically, as shown in Fig. 6, three electrode bodies 20a each with the positive electrode second collecting unit 52 and the negative electrode second collecting unit 62 are provided, and are arranged along the short side direction X as electrode bodies 20a, 20b, and 20c. At this time, the electrode bodies 20a, 20b, and 20c may be arranged such that the positive electrode second collecting unit 52 is arranged on one side in the long side direction Y (left side in Fig. 5), and the negative electrode second collecting unit 62 is arranged on the other side in the long side direction Y (right side in Fig. 5).

Then, as shown in Fig. 4, the positive electrode first collecting unit 51 fixed to the sealing plate 14 and the positive electrode second collecting units 52 of the electrode bodies 20a, 20b, and 20c are bonded to each other with the positive electrode tabs 22t curved. Further, the negative electrode first collecting unit 61 fixed to the sealing plate 14 and the negative electrode second collecting unit 62 of the electrode bodies 20a, 20b, and 20c are bonded to each other with the negative electrode tabs 24t curved. The bonding method used can be, for example, welding such as ultrasound welding, resistance welding, and laser welding. The bonding method is particularly preferably welding by irradiation with high-energy beams such as laser. By such welding processing, a bonding portion is formed in each of a recess of the positive electrode second collecting units 52 and a recess of the negative electrode second collecting unit 62.

In the inserting, the second integrated body produced in the second attaching is housed in an internal space of the exterior body 12. Specifically, first, an insulating resin sheet made of a resin material such as polyethylene (PE) is bent into a bag or a box shape, thereby preparing an electrode body holder 29. Then, an electrode body group 20 is housed in the electrode body holder 29. Thereafter, the electrode body group 20 covered with the electrode body holder 29 is inserted into the exterior body 12. If the electrode body group 20 is heavy, approximately 1 kg or more, for example, 1.5 kg or more, further 2 kg to 3 kg, the exterior body 12 may be arranged such that the long side wall 12b of the exterior body 12 intersects the direction of gravity (the exterior body 12 is arranged horizontally), and the electrode body group 20 may be inserted into the exterior body 12.

In the sealing, the sealing plate 14 is bonded to the edge of the opening 12h of the exterior body 12 to seal the opening 12h. The sealing can be performed simultaneously with or after the inserting. In the sealing, the exterior body 12 and the sealing plate 14 are preferably bonded to each other by welding. The bonding between the exterior body 12 and the sealing plate 14 by welding can be performed by, for example, laser welding. An electrolyte is then injected into a liquid injection hole 15, and the liquid injection hole 15 is closed by the sealing member 16. Thus, a battery 100 is sealed. In this manner, battery 100 can be manufactured.

The battery 100 can be used for various applications. For example, the battery 100 can be suitably used for applications in which external forces such as vibrations or impact may be applied during use, for example, a power source (drive power source) for motors in vehicles (typically, passenger cars and trucks). Although not particularly limited thereto, examples of the types of the vehicles include plug-in hybrid vehicle (PHEV), a hybrid vehicle (HEV), and electric vehicles (BEV). The battery 100 can be used suitably as an assembled battery obtained by arranging multiple batteries 100 in the alignment direction and applying a load from the alignment direction with a constrained mechanism.

While some embodiments of the present disclosure have been described above, the embodiments are mere examples. The present disclosure can be executed in various other embodiments. The present disclosure can be executed based on the contents disclosed herein and the technical knowledge in the present field. The technology described is the appended claims include various modifications and changes of the foregoing embodiments. For example, it is possible to replace partially the embodiments with other aspects, and it is also possible to add other variations to the embodiments. If the technical feature is not described as essential, it can be eliminated, as appropriate.

For example, Fig. 14 is a view according to a second embodiment, which corresponds to Fig. 12. As shown in Fig. 14, in the second embodiment, the shortest distances of the positive electrode tabs 122t₁, 122t₂, ..., and 122t₉ in the first region P are substantially the same, and the shortest distances of the positive electrode tabs 122t₁', 122t₂', ..., 122t₉', and 122t₁₀' in the second region Q are substantially the same.

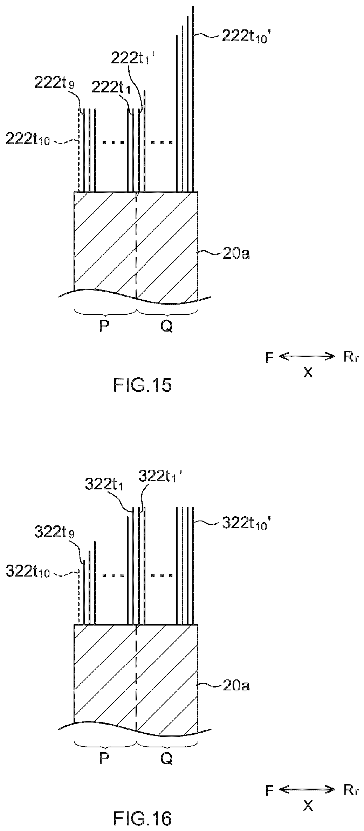

For example, Fig. 15 is a view according to a third embodiment, which corresponds to Fig. 12. As shown in Fig. 15, in the third embodiment, the shortest distances of the positive electrode tabs 222t₁, 222t₂, ..., and 222t₉ in the first region P are substantially the same, and the shortest distances of the positive electrode tabs 222t₁', 222t₂', ..., 222t₉', and 222t₁₀' in the second region Q gradually increase in this order. The shortest distances of the positive electrode tabs 222ti and 222t₁' are substantially the same.

For example, Fig. 16 is a view according to a fourth embodiment, which corresponds to Fig. 12. As shown in Fig. 16, in the fourth embodiment, the shortest distances of the positive electrode tabs 322t₉, 322t₈, ..., and 322t₁ in the first region P gradually increase in this order, and the shortest distances of the positive electrode tabs 322t₁', 322t₂', ..., 322t₉', and 322t₁₀' in the second region Q are substantially the same. The shortest distances of the positive electrode tabs 322ti and 322t₁' are substantially the same.

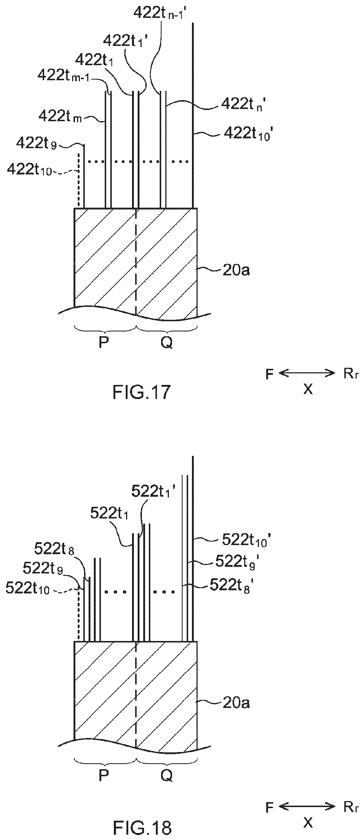

For example, Fig. 17 is a view according to a fifth embodiment, which corresponds to Fig. 12. As shown in Fig. 17, in the fifth embodiment, in the first region P and the second region Q, the shortest distances of the positive electrode tabs 422t₉, ..., and 422tₘ gradually increase, the shortest distances of the positive electrode tabs 422tₘ₋₁, ..., and 422tₙ₋₁' are substantially the same, and the shortest distances of the positive electrode tabs 422tₙ', ..., and 422t₁₀' gradually increase. The shortest distances of the positive electrode tabs 422tₘ₋₁, 422tₘ, 422tₙ₋₁, and 422tₙ are substantially the same. The m and n are natural numbers of 2 to 8, and may be identical to or different from each other.

For example, Fig. 18 is a view according to a sixth embodiment, which corresponds to Fig. 12. As shown in Fig. 18, in the sixth embodiment, in the positive electrode tabs 522t in the second region Q except for the positive electrode tab 522t₁₀', the shortest distances of the adjacent positive electrode tabs 522t are substantially the same.

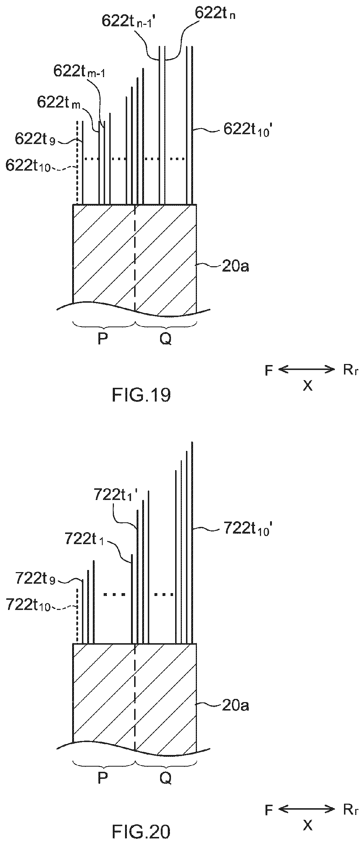

For example, Fig. 19 is a view according to a seventh embodiment, which corresponds to Fig. 12. As shown in Fig. 19, in the seventh embodiment, in the first region P and the second region Q, the shortest distances of the positive electrode tabs 622t₉, ..., and 622tₘ are substantially the same, the shortest distances of the positive electrode tabs 622tₘ₋₁, ..., and 622tₙ₋₁' gradually increase in this order, and the shortest distances of the positive electrode tabs 622tₙ', ..., and 622t₁₀' are substantially the same. The m and n are natural numbers of 2 to 8, and may be identical to or different from each other.

For example, Fig. 20 is a view according to a eighth embodiment, which corresponds to Fig. 12. As shown in Fig. 20, in the eighth embodiment, the positive electrode tabs 722t are formed such that the shortest distances of the positive electrode tabs 722t gradually decrease from the outer edge of the second region Q to the outer edge of the first region P in the thickness direction X of the electrode body 20a. Here, in the eighth embodiment, positive electrode tabs 722t are formed such that the ratio of the shortest distance of the positive electrode tab 722t₁ to the shortest distance of positive electrode tab 722ti' reaches about 1.5 to 2.

In the second to eighth embodiments, an average value of the shortest distances of the positive electrode tabs in the first region P is equal to or less than an average value of the shortest distances of the positive electrode tabs in the second region Q. Further, a difference between the average value of the shortest distances of the positive electrode tabs in the first region P and the average value of the shortest distances of the positive electrode tabs 22t in the second region Q is smaller than the thickness of the electrode body 20a.

## Claims

1. A battery (100) comprising:
a flat wound electrode body (20a, 20b, 20c) including a first electrode (22), a second electrode (24), and a separator (26), the first electrode (22) and the second electrode (24) being wound via the separator (26); and
a battery case (10) housing the wound electrode body (20a, 20b, 20c), wherein
the wound electrode body (20a, 20b, 20c) has a lamination structure (28) in which multilayers of the first electrode (22) and the second electrode (24) are stacked via the separator (26),
multiple tabs (22t) connected to the first electrode (22) protrude from one end of the wound electrode body (20a, 20b, 20c) in the winding axis direction, and
in a thickness direction of the wound electrode body (20a, 20b, 20c), the thickness direction being a short side direction (X) of the battery (100), an average value of shortest distances of the tabs (22t) present on one side of the wound electrode body (20a, 20b, 20c) with respect to a winding center (O) of the wound electrode body (20a, 20b, 20c) from one end to tips of the tabs (22t) in a protruding direction of the tabs (22t) is equal to or less than an average value of shortest distances of the tabs (22t) present on the other side with respect to the winding center (O),
**characterized in that**
a difference between the average value of the shortest distances of the tabs (22t) present on the one side and the average value of the shortest distances of the tabs (22t) present on the other side is smaller than a thickness of the wound electrode body (20a, 20b, 20c),
when the number of layers of the first electrode (22) stacked is A and the number of the tabs (22t) is B on the one side, a ratio (B/A) is smaller than 1,
the tabs (22t) present on each of the one side and the other side are collected at a position at which the tabs (22t) are unevenly distributed on the one side with respect to the winding center (O) in the thickness direction,
the tabs (22t) include a collector foil forming area on the one side, and
when the shortest distances from one end in the winding axis direction to the collector foil forming area is a, the length of the collector foil forming area in the protruding direction is s, the thickness of the wound electrode body (20a, 20b, 20c) is d, and a minimum value of and a maximum value of the shortest distances of the tabs (22t) in the wound electrode body (20a, 20b, 20c) are H and H', respectively, the following relational expressions (I) and (II): $H = a + s$ $s + {\left({a}^{2}+{d}^{2}\right)}^{1 / 2} < H ′ < s + a + d$ are satisfied.

2. The battery (100) according to claim 1, wherein the ratio (B/A) is smaller than a ratio (D/C) where the number of layers of the first electrode (22) stacked is C and the number of tabs (22t) is D on the other side.

3. The battery (100) according to claim 2, wherein the B is smaller than the D.

4. The battery (100) according to any one of claims 1 to 3, wherein the ratio (B/A) is larger than 0.5 and less than 1.

5. The battery (100) according to any one of claims 1 to 4, wherein the ratio (B/A) is larger than 0.75 and less than 1.

6. The battery (100) according to any one of claims 1 to 5, wherein
on a same winding roll of the wound electrode body (20a, 20b, 20c), the shortest distances of the tabs (22t) present on the one side are smaller than the shortest distances of the tabs (22t) present on the other side.

7. The battery (100) according to any one of claims 1 to 6, wherein the shortest distances of the tabs (22t) gradually decrease from an outer edge on the other side to an outer edge on the one side in the thickness direction.

8. The battery (100) according to any one of claims 1 to 7, wherein the shortest distances of the tabs (22t) other than a tab (22t) with a minimum shortest distance among the tabs (22t) in the wound electrode body (20a, 20b, 20c) satisfies the relational expression (II).

## Patentansprüche

1. Batterie (100), aufweisend:
einen flach gewickelten Elektrodenkörper (20a, 20b, 20c) mit einer ersten Elektrode (22), einer zweiten Elektrode (24) und einem Separator (26), wobei die erste Elektrode (22) und die zweite Elektrode (24) über den Separator (26) gewickelt sind; und
ein Batteriegehäuse (10), das den gewickelten Elektrodenkörper (20a, 20b, 20c) aufnimmt, wobei
der gewickelte Elektrodenkörper (20a, 20b, 20c) eine Laminierungsstruktur (28) aufweist, in der mehrere Schichten der ersten Elektrode (22) und der zweiten Elektrode (24) über den Separator (26) gestapelt sind,
mehrere mit der ersten Elektrode (22) verbundene Laschen (22t) von einem Ende des gewickelten Elektrodenkörpers (20a, 20b, 20c) in Richtung der Wickelachse herausragen, und
in einer Dickenrichtung des gewickelten Elektrodenkörpers (20a, 20b, 20c), wobei die Dickenrichtung einer Kurzseitenrichtung (X) der Batterie (100) entspricht, ein Durchschnittswert der kürzesten Abstände der auf einer Seite des gewickelten Elektrodenkörpers (20a, 20b, 20c) vorhandenen Laschen (22t) in Bezug auf einen Wickelmittelpunkt (O) des gewickelten Elektrodenkörpers (20a, 20b, 20c) von einem Ende bis zu den Spitzen der Laschen (22t) in einer herausragenden Richtung der Laschen (22t) kleiner oder gleich einem Durchschnittswert der kürzesten Abstände der auf der anderen Seite vorhandenen Laschen (22t) in Bezug auf den Wickelmittelpunkt (O) ist,
**dadurch gekennzeichnet, dass**
eine Differenz zwischen dem Durchschnittswert der kürzesten Abstände der auf der einen Seite vorhandenen Laschen (22t) und dem Durchschnittswert der kürzesten Abstände der auf der anderen Seite vorhandenen Laschen (22t) kleiner ist als die Dicke des gewickelten Elektrodenkörpers (20a, 20b, 20c),
wenn die Anzahl der gestapelten Schichten der ersten Elektrode (22) A ist und die Anzahl der Laschen (22t) auf der einen Seite B beträgt, ein Verhältnis (B/A) kleiner als 1 ist,
die auf der einen Seite und der anderen Seite vorhandenen Laschen (22t) an einer Stelle zusammengefasst sind, an der die Laschen (22t) auf der einen Seite in der Dickenrichtung in Bezug auf den Wickelmittelpunkt (O) ungleichmäßig verteilt sind,
die Laschen (22t) auf der einen Seite einen Bereich zur Bildung einer Kollektorfolie umfassen, und
wenn die kürzesten Abstände von einem Ende in Richtung der Wickelachse zum Bereich zur Bildung der Kollektorfolie a sind, die Länge des Bereichs zur Bildung der Kollektorfolie in der herausragenden Richtung s ist, die Dicke des gewickelten Elektrodenkörpers (20a, 20b, 20c) d ist und ein Minimalwert sowie ein Maximalwert der kürzesten Abstände der Laschen (22t) in dem gewickelten Elektrodenkörper (20a, 20b, 20c) H bzw. H' sind, sind folgende Vergleichsausrücke (I) und (II) erfüllt: $H = a + s$ $s + {\left({a}^{2}+{d}^{2}\right)}^{1 / 2} < H ′ < s + a + d$

2. Batterie (100) nach Anspruch 1, wobei das Verhältnis (B/A) kleiner ist als ein Verhältnis (D/C), wobei die Anzahl der gestapelten Schichten der ersten Elektrode (22) C ist und die Anzahl der Laschen (22t) auf der anderen Seite D ist.

3. Batterie (100) nach Anspruch 2, wobei B kleiner ist als D.

4. Batterie (100) nach einem der Ansprüche 1 bis 3, wobei das Verhältnis (B/A) größer als 0,5 und kleiner als 1 ist.

5. Batterie (100) nach einem der Ansprüche 1 bis 4, wobei das Verhältnis (B/A) größer als 0,75 und kleiner als 1 ist.

6. Batterie (100) nach einem der Ansprüche 1 bis 5, wobei
auf derselben Wickelrolle des gewickelten Elektrodenkörpers (20a, 20b, 20c) die kürzesten Abstände der auf der einen Seite vorhandenen Laschen (22t) kleiner sind als die kürzesten Abstände der auf der anderen Seite vorhandenen Laschen (22t).

7. Batterie (100) nach einem der Ansprüche 1 bis 6, wobei die kürzesten Abstände der Laschen (22t) in der Dickenrichtung von einer Außenkante auf der anderen Seite zu einer Außenkante auf der einen Seite hin allmählich abnehmen.

8. Batterie (100) nach einem der Ansprüche 1 bis 7, wobei die kürzesten Abstände der Laschen (22t), mit Ausnahme einer Lasche (22t) mit einem kleinsten kürzesten Abstand unter den Laschen (22t) in dem gewickelten Elektrodenkörper (20a, 20b, 20c), den Vergleichsausdruck (II) erfüllen.

## Revendications

1. Une batterie (100) comprenant :
un corps d'électrode enroulé plat (20a, 20b, 20c) comprenant une première électrode (22), une deuxième électrode (24) et un séparateur (26), la première électrode (22) et la deuxième électrode (24) étant enroulées à travers le séparateur (26) ; et
un boîtier de batterie (10) logeant le corps d'électrode enroulé (20a, 20b, 20c), dans laquelle
le corps d'électrode enroulé (20a, 20b, 20c) présente une structure stratifiée (28) dans laquelle plusieurs couches de la première électrode (22) et de la deuxième électrode (24) sont empilées à travers le séparateur (26),
plusieurs languettes (22t) reliées à la première électrode (22) font saillie depuis une extrémité du corps d'électrode enroulé (20a, 20b, 20c) dans la direction de l'axe d'enroulement, et
dans une direction d'épaisseur du corps d'électrode enroulé (20a, 20b, 20c), la direction d'épaisseur étant une direction de côté court (X) de la batterie (100), une valeur moyenne des distances les plus courtes entre les languettes (22t) présentes sur un côté du corps d'électrode enroulé (20a, 20b, 20c) par rapport à un centre d'enroulement (O) du corps d'électrode enroulé (20a, 20b, 20c), d'une extrémité aux pointes des languettes (22t) dans la direction de saillie de celles-ci, est égale ou inférieure à la valeur moyenne des distances les plus courtes des languettes (22t) présentes de l'autre côté par rapport au centre d'enroulement (O),
**caractérisée en ce que**
une différence entre la valeur moyenne des distances les plus courtes des languettes (22t) présentes d'un côté et la valeur moyenne des distances les plus courtes des languettes (22t) présentes de l'autre côté est inférieure à l'épaisseur du corps d'électrode enroulé (20a, 20b, 20c),
lorsque le nombre de couches de la première électrode (22) empilées est égal à A et que le nombre de languettes (22t) est égal à B d'un côté, le rapport (B/A) est inférieur à 1,
les languettes (22t) présentes respectivement sur chacun des deux côtés sont regroupées à un emplacement où elles sont réparties de manière inégale sur ce côté par rapport au centre d'enroulement (O) dans le sens de l'épaisseur,
les languettes (22t) comportent une zone de formation de la feuille collectrice sur ce côté, et
lorsque les distances les plus courtes entre une extrémité dans la direction de l'axe d'enroulement et la zone formant la feuille collectrice sont a, que la longueur de la zone formant la feuille collectrice dans la direction de saillie est s, que l'épaisseur du corps d'électrode enroulé (20a, 20b, 20c) est d, et que les valeurs minimale et maximale des distances les plus courtes des languettes (22t) dans le corps d'électrode enroulé (20a, 20b, 20c) sont respectivement H et H', les relations (I) et (II) suivantes : $H = a + s$ $s + {\left({a}^{2}+{d}^{2}\right)}^{1 / 2} < H ′ < s + a + d$ sont satisfaites.

2. La batterie (100) selon la revendication 1, dans laquelle le rapport (B/A) est inférieur à un rapport (D/C), C correspondant au nombre de couches de la première électrode (22) empilées et D au nombre de languettes (22t) situées de l'autre côté.

3. La batterie (100) selon la revendication 2, dans laquelle B est inférieur à D.

4. La batterie (100) selon l'une quelconque des revendications 1 à 3, dans laquelle le rapport (B/A) est supérieur à 0,5 et inférieur à 1.

5. La batterie (100) selon l'une quelconque des revendications 1 à 4, dans laquelle le rapport (B/A) est supérieur à 0,75 et inférieur à 1.

6. La batterie (100) selon l'une quelconque des revendications 1 à 5, dans laquelle
sur un même rouleau d'enroulement du corps d'électrode enroulé (20a, 20b, 20c), les distances les plus courtes entre les languettes (22t) présentes d'un côté sont inférieures aux distances les plus courtes entre les languettes (22t) présentes de l'autre côté.

7. La batterie (100) selon l'une quelconque des revendications 1 à 6, dans laquelle les distances les plus courtes des languettes (22t) diminuent progressivement depuis un bord extérieur situé de l'autre côté jusqu'à un bord extérieur situé d'un côté, dans le sens de l'épaisseur.

8. La batterie (100) selon l'une quelconque des revendications 1 à 7, dans laquelle les distances les plus courtes des languettes (22t), à l'exception d'une languette (22t) présentant la distance la plus courte parmi les languettes (22t) du corps d'électrode enroulé (20a, 20b, 20c), satisfont à l'expression relationnelle (II).
